# EUROPEAN PATENT APPLICATION

(11) **EP 0 806 279 A1**
(43) Date of publication of application: **12.11.1997**
(21) Application number: 97201354.4
(22) Date of filing: 06.05.1997
(51) Int. Cl.: B29C 47/06, B29C 47/20

(54) **Extrusion method and head for making pipes of pressure sensitive plastic material**

(30) Priority: 07.05.1996 IT MI960899
(71) Applicant: Nupi S.p.A., 40026 Imola (Bologna) (IT)
(72) Inventor: Genoni, Massimo, 40020 Imola (Bologna) (IT); Wüst, Hans-Joachim, 85586 Poing (DE)
(74) Representative: Faraggiana, Vittorio, Dr. Ing.

(57) **Abstract**

A head (10) for extrusion of a plastic material which is responsive to localized pressure variations at least when it is in a flowable state, for making a wall layer of a pipe, comprises a plastic material feeding channel (12) from an inlet duct (11) to a first annulus-shaped outlet (13) for extrusion of the plastic material in a tubular form. The feeding channel (12) has a continuously decreasing height on moving away from the inlet duct. The annulus at a furthermost area from the inlet duct may have a sector (13a) of a predetermined angular width which has a greater thickness than the remaining annulus portion. Thus the material can be extruded without submitting it to localized pressure variations while maintaining a high evenness over 360° and thereby achieving a substantial uniformity in the wall thickness.

## Description

The present invention relates to an extrusion method and head for making a pipe using plastic materials of a type having low tolerance to the localized pressure variations that are produced within the extrusion head in the course of traditional extrusion operations. In particular, reference is made, although not exclusively, to extrusion of multi-layered pipes.

In the extrusion of plastic material pipes, evenness in the thickness of the pipe wall along the pipe perimeter is an essential feature.

Usually, in order to ensure this evenness, particular and rather tortuous conformations of the plastic material feeding channel between the plastics inlet and the extrusion orifice are employed. These conformations maximize evennness in plastics distribution, while on the other hand giving rise to rather high and irregular loss of head between the material inlet duct and the different points of the extrusion orifice. To minimize effects resulting from the different losses of head and maintain a uniform distribution, the plastic material is therefore fed to the extruder at a relatively high pressure.

Consequently, the material is subjected to localized high pressure variations.

There are plastic materials that are considered as inappropriate to be used in extrusion processes because they are unable to withstand the relatively high pressures needed for extrusion, although some of them would have features capable of making them excellent for manufacturing pipes resistant to particularly aggressive fluids.

For example, plastic materials made up of copolymers consisting of carbon monoxide and one or more lower olefins or partially cristalline aliphatic Polyketone (such as, for example, a plastic material known under the trade name "Carilon") have high resistance to hydrocarbons, but are considered unable to be extruded because the normal pressures and pressure variations needed for extrusion would degrade the plastic material within a short period of time after beginning of the extrusion operation.

It is a general object of the present invention to obviate the above mentioned drawbacks by providing an extrusion method and an extrusion head applying said method, which enable extrusion of a plastic material which is responsive to localized pressure variations, at least in a flowable state thereof.

In view of the above object, in accordance with the invention, an extrusion head has been provided for plastic material responsive to localized pressure variations, at least when it is in a flowable state, for making a layer of a pipe wall, which comprises a plastic material feeding channel from an inlet duct to a first annulus-shaped outlet for extrusion of the plastic material in a tubular form, characterized in that the feeding channel has a continuously decreasing height on moving away from the inlet duct.

A method in accordance with the invention comprises the step of making the plastic material follow a feeding channel from an inlet duct to an annulus-shaped outlet for extrusion of the plastic material in a tubular form, the feeding duct having a continuously decreasing height moving away from the inlet duct.

For better explaining the innovatory principles of the present invention and the advantages it offers over the known art, a possible embodiment of the invention applying said principles will be given hereinafter, by way of non-limiting example, with the aid of the accompanying drawings. In the drawings:
- Fig. 1 is a longitudinal sectional view of an extrusion head in accordance with the invention;
- Fig. 2 is a diagrammatic view of a detail of the head shown in Fig. 1;
- Fig. 3 is a transverse diagrammatic view of an area close to an extrusion orifice of the head shown in Fig. 1;
- Fig. 4 is a plan development of a plastics distribution part in the head shown in Fig. 1.

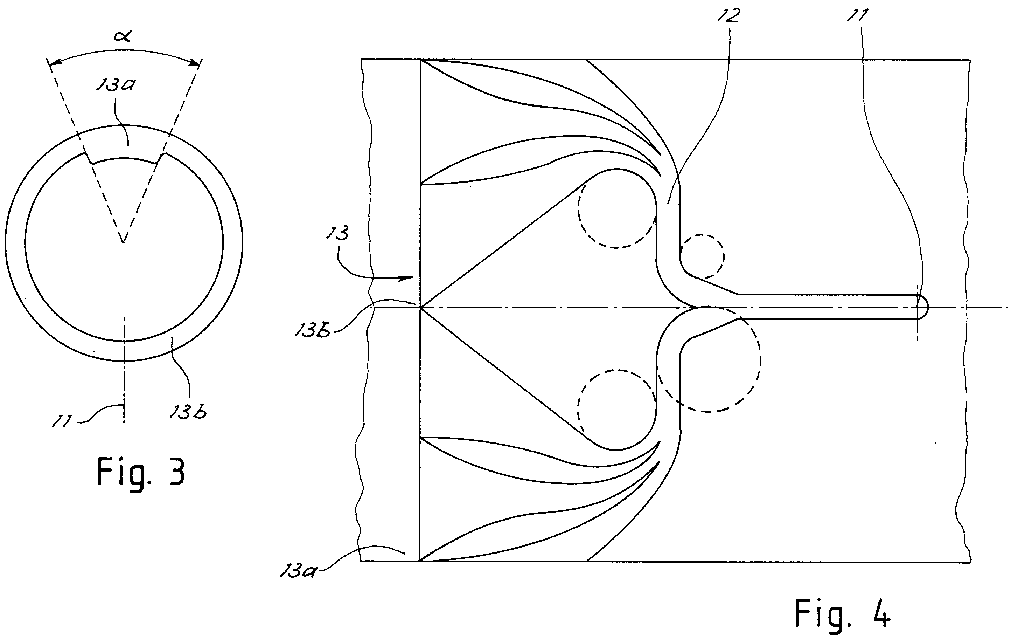

With reference to the drawings, an extrusion head 10 is shown which comprises an inlet duct 11 sending the low-tolerance plastic material to be extruded to a feeding channel 12. The feeding channel, the plan development of which is shown in Fig. 4, carries the plastic material to a first annulus-shaped outlet 13 for extrusion of the plastic material in a tubular form.

As seen in Fig. 4, the feeding channel is made free of corners and stagnation loops and must have gradual section variations. It has been found preferable for the feeding channel to widen out from the inlet channel to the annulus-shaped outlet following a path having radii of curvature at least as large as 10 mm. Still, advantageously, the distribution channel is chromium plated.

Thus, sharp variations of head and consequently sharp pressure variations are avoided in the plastic material.

On the other hand, however, this fact can hinder an even distribution of the material.

In order to avoid this drawback, in accordance with the innovatory principles of the invention, as diagrammatically shown in Fig. 3 (where proportions are not observed, for the sake of clarity), it has been found advantageous for the annulus 13 at a furthermost area from the inlet duct 11 to have a sector 13a of a predetermined angular width α with a greater thickness than the remaining annulus portion 13b.

The angular width α is included between 20° and 90°, preferably in the vicinity of 45°. The ratio of the thickness of sector 13a to the thickness of the remaining annulus portion 13b is included between 1.1 and 1.5, advantageously close to 1.3.

For instance, for the head shown in the figure the outer diameter of annulus 13 is 160.3 mm, whereas the inner diameter is 157.3 mm at the area 13a and 157.7 mm at the area 13b. The annulus thickness is therefore 1.3 mm, except for area 13a where it is 1.7 mm.

It has been surprisingly found that increase in the annulus thickness enables an even wall thickness of the extruded layer to be achieved even at relatively low extrusion pressures, also when they do not exceed 160 bars and even if they are in the range of 140-150 bars.

It has been also found that passages of the plastic material following a particularly smooth progress can be thus obtained, while keeping a satisfactory evenness in the plastic material distribution in the annulus. As a result, a plastic material of the type hitherto considered as unable to be extruded in a satisfactory manner can now be extruded, that is a plastic material that, at least as regards its flowable state, is responsive to a localized pressure excess or pressure variation and that therefore would degrade if extruded by means of normal heads as used in known extrusion processes.

For example, plastic materials made up of copolymers consisting of carbon monoxide and one or more lower olefins have been found able to be extruded. A plastic material of the above type is, for example, that available under the trade name "Carilon", which is a partially cristalline aliphatic Polyketone.

Regarding the extremely difficult processing such materials, it has been surprisingly found as estremely important that no decompression of the material occurs on the channel-way within the extrusion head. Decompression is caused, if the melted material has to pass obstacles or passages which become wider. In this places the melted material begins to overheat and to desintegrate chemically and begins to stick on the surface areas of the extrusion channel.

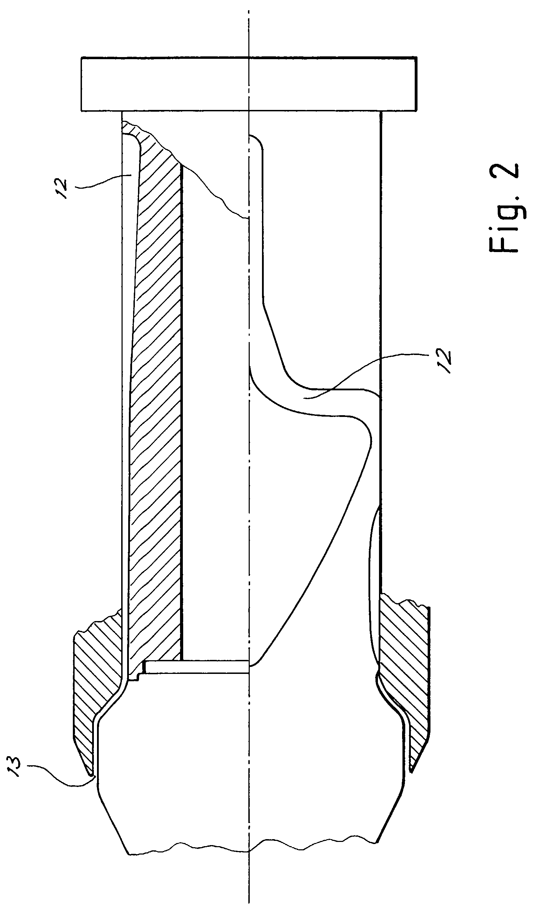

As shown in Fig. 2, where the upper half portion represents the radial section of the channel shown in the lower half portion, for a satisfactory graduality in pressure variations along the ducts, it has been found that the feeding channel 12 must have a decreasing height on moving away from the inlet channel 11. Extrusion compression is thus achieved gradually, as it is generated by the continuous decrease in height of the feeding channel, without concentrated compression or decompression areas. It has been found advantageous for the feeding channel 12 to have ratio between height of the outlet end and height of the inlet end from 1/2 to 1/5, e.g. a height evenly decreasing from 10.5 mm to 2.6 mm.

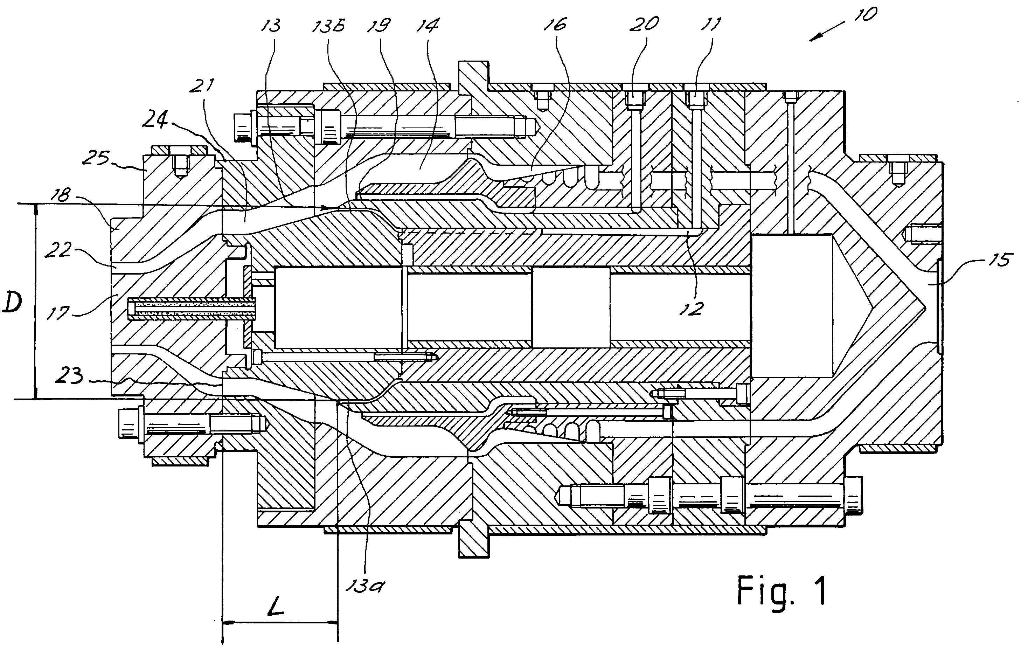

Shown in Fig. 1 is a head 10 adapted to make a multi-layered pipe. Therefore, in addition to the first annulus-shaped outlet 13, there is the presence of a second outlet 14 coaxial with, and external to the first outlet; the second outlet 14 is annulus-shaped as well and is connected to a duct 14 for introduction of another plastic material, for extrusion through the second outlet of a further layer of plastic material on the layer coming out of annulus 13. By the word "outlet" it is herein meant the arrival points of ducts at the converging area of the different material flows for giving rise to the multi-layered pipe. Outlets open into a main duct 21 towards an outlet orifice 22 for the extruded pipe.

The plastic material fed at 15 is a normal extrusile (i.e. able to be extruded) plastic material, high density polyethylene for example, which is adapted to provide appropriate mechanical features to the extruded pipe. The distribution channel 16 is therefore made following traditional techniques to achieve an even distribution of a normally extrusile material.

The channel, coaxial with the head, is a channel of high flow rate and is of a type intended for classical distribution of thermoplastics in a pipe-extrusion head, provided with a back entrance on the head axis to convey the melted mass from a known cylinder-screw (not shown) for example, a distributor for generation of an annulus, an area 21 for compression and conveyance to the tap 17 and female piece 18 of the outlet orifice 22.

For obtaining adhesion of the two layers, a third annulus-shaped outlet 19 may be provided between the first 13 and second 14 outlets; outlet 19 is connected to an inlet duct 20 for introduction of an adhesive material, to extrude an adhesive or bonding layer between the first and second layers.

Feeding of the two products to inlets 11 and 20 takes place by means of known extruders (not shown) of sizes and flow rates related to the main extruder for polyethylene.

Flows fed to ducts 11 and 20, orthogonal to the main flow, reach the two distinct distributing channels and go on separated from each other and mutually parallel until they couple with the main polyethylene flow at about 200 mm from the head outlet, before the tap and female piece.

Thus, a three-layered pipe is formed which has an outer wall of polyethylene, a middle layer of adhesive material and an inner wall of a material having high features.

With reference to the figure 1, it has been found advantageous that the length-diameter ratio of L/D=<1.85.

The length L begins with the ring shaped outlet orifice or annulus-shaped outlet 13 of the inner layer and ends with the ring shaped outlet orifice or annulus-shaped outlet 23 of the "adapter" 24 in which the three separate layers are brought to confluence to a one-piece three-layer pipe stream. The "adapter" 24 is positioned between the aforementioned outlet orifice 13 of the inner layer and the "dieset" 25 in which the combined stream of three layer is reduced to the desired diameter. The adapter 24 in general remains fixed with the three layer head, whereas the dieset 25 is exchanged according to the required final diameter dimensions of the three layer pipe.

At this point it is apparent that the intended purposes have been achieved, since in this way a pipe, even of the multi-layered type, can be extruded which has a wall layer formed of a plastic material which is usually unable to be extruded in a satisfactory manner because it hardly bears localized pressures and pressure variations normally present in traditional extruders. By the method and head of the invention, the plastic material can be supplied to the feeding channel even at a pressure not exceeding 140-150 bars. In addition, localized pressure variations are avoided, although an appropriate circumferential evenness in the plastic material distribution is achieved.

By the extrusion method in accordance with the invention, a uniform distribution of the material over 360° can be obtained.

Obviously, the above description of an embodiment applying the innovatory principles of the present invention is given for purposes of illustration only and therefore must not be considered as a limitation of the scope of the invention as herein claimed.

For example, the actual sizes and proportions of the different parts will be dependent on the pipe diameter and the desired wall thicknesses and layers. The real "eccentricity" of the extrusion annulus will also depend on the desired actual layer thickness and pipe diameter and on the features of the employed material.

## Claims

1. An extrusion head for plastic material responsive to localized pressure variations, at least when it is in a flowable state, for making a layer of a pipe wall, comprising a plastic material feeding channel (12) from an inlet duct (11) to a first annulus-shaped outlet (13) for extrusion of the plastic material in a tubular form, characterized in that the feeding channel (12) has a continuously decreasing height on moving away from the inlet duct.

2. A head as claimed in claim 1, characterized in that the annulus at a furthermost area from the inlet duct, has a sector (13a) of a predetermined angular width which has a greater thickness than the remaining portion (13b) of the annulus.

3. A head as claimed in claim 2, characterized in that the predetermined angular width is included between 20° and 90°, preferably in the vicinity of 45°.

4. A head as claimed in claim 2, characterized in that the feeding channel (12) widens out from the inlet channel to the annulus-shaped outlet following a path having radii of curvature at least as large as 10 mm.

5. A head as claimed in claim 2, characterized in that the ratio of the thickness of said sector to the thickness of the remaining annulus portion is included between 1.1 and 1.5.

6. A head as claimed in claim 2, characterized in that, coaxially with the first annulus-shaped outlet and externally thereof, it comprises a second annulus-shaped outlet (14) which is connected to an inlet duct (15) of another plastic material, for extrusion through the second outlet of another layer of plastic material on said wall layer.

7. A head according to claim 6, characterized in that a third annulus-shaped outlet (19) is coaxially present between the first and second outlets, said third outlet being connected to an inlet duct (20) of an adhesive material, for extrusion of an adhesive or bonding layer between the first and second layers.

8. A head according to claim 7, characterized in that the first, second and third outlets open into one and the same annulus-shaped duct (21) provided with an outlet orifice (22) for the pipe made up of the three superposed layers.

9. A head as claimed in claim 7, characterized in that the diameter D of the annulus-shaped outlet and the length L of a compression passage, which begins with the annulus-shaped outlet (13) and ends with an annulus-shaped outlet (23) of a adapter (24) in which the three separate layers are brought to confluence to a one-piece three-layer pipe stream, have a length-diameter ratio L/D=<1.85.

10. A head according to claim 8, characterized in that the inlet ducts (11, 20) for said plastic material and adhesive material are disposed substantially perpendicular to the axis of the respective annulus-shaped outlets.

11. A head according to claim 1, characterized in that the channel is chromium plated.

12. A head according to claim 1, characterized in that the ratio between height of outlet end of the channel (12) and height of the inlet end of the channel (12) is between 1/2 and 1/5.

13. A method of extruding a plastic material which is responsive to localized pressure variations, at least when it is in a flowable state, to make a layer of a pipe wall, comprising the step of making the plastic material follow a feeding channel from an inlet duct to an annulus-shaped outlet for extrusion of the plastic material in a tubular form, the feeding duct having a continuously decreasing height moving away from the inlet duct.

14. A method as claimed in claim 13, in which the plastic material is fed through the annulus which at a furthermost area of the inlet duct has a sector of predetermined angular width which has a greater thickness than the remaining annulus portion.

15. A method as claimed in claim 13, in which a further layer of a second plastic material is extruded over said wall layer.

16. A method as claimed in claim 15, in which a layer of adhesive material is inserted between said wall layer and further layer of a second plastic material.

17. A method as claimed in claim 13, in which said plastic material is supplied to the feeding channel at a pressure not exceeding 160 bars.

18. A method as claimed in claim 13, in which the second plastic material is polyethylene.

19. A method as claimed in claim 13, in which the plastic material is a partialy cristalline aliphatic Polyketone.
